# EUROPÄISCHE PATENTANMELDUNG

(11) **EP 1 533 642 A1**
(43) Veröffentlichungstag der Anmeldung: **25.05.2005**
(21) Anmeldenummer: 04027399.7
(22) Anmeldetag: 18.11.2004
(51) Int. Cl.: G02B 21/22, G02B 21/24, G02B 21/36

(54) **Stereomikroskop**

(30) Priorität: 21.11.2003 DE 10355529
(71) Anmelder: CARL ZEISS JENA GmbH, 07745 Jena (DE)
(72) Erfinder: Knoblich, Johannes, 07747 Jena (DE); Hein, Detlef, 07743 Jena (DE); Kaufhold, Tobias, 07749 Jena (DE); Serfling, Thomas, 07743 Jena (DE); Osten, Günter, 07749 Jena (DE)

(57) **Zusammenfassung**

Die Erfindung betrifft ein Stereomikroskop mit elektrisch steuerbaren Komponenten, welches sich durch eine große Benutzerfreundlichkeit und Ergonomie auszeichnet.

Dazu sind alle wesentlichen Komponenten mit einer elektrischen Ansteuerung oder Statuserkennung versehen und über eine Vernetzung miteinander verbunden.

Vorteilhaft ist ein gemeinsames universelles Bedienpult vorgesehen.

## Beschreibung

Die Erfindung betrifft ein Stereomikroskop mit elektrisch steuerbaren Komponenten, welches sich durch eine große Benutzerfreundlichkeit und Ergonomie auszeichnet.

Moderne Stereomikroskope sind häufig modular aufgebaut, um sie einfach an verschiedene Aufgabenstellungen anpassen zu können. Beim Stand der Technik sind die einzelnen optischen und mechanischen Komponenten dieser Stereomikroskop-Systeme für sich funktionell autark und werden auch komponentenweise bedient. Durch Kombination verschiedener Komponenten sind jedoch teilweise Wechselwirkungen zwischen den Komponenten zu berücksichtigen, welche der Benutzer kennen und beachten muss. So ist z.B. in vielen Durchlicht-Beleuchtungseinrichtungen das ausgeleuchtete Objektfeld über schaltbare Anpassoptiken manuell an die verschiedenen wählbaren Objektive anzupassen.
Aufgrund von im Allgemeinen kontinuierlich verschiebbaren Spiegeln, Blenden etc. zur Realisierung dieser Anpassungen ist eine Reproduzierbarkeit der Einstellungen nicht exakt möglich und beim Wechsel der Benutzer muß der neue Benutzer jedesmal das Stereomikroskop-System manuell neu einstellen. Das gleiche gilt auch für verschiedene Applikationsfälle eines einzelnen Benutzers.

Wegen der modularen Bauweise befinden sich die Bedienelemente in der Regel direkt an den Komponenten und sind damit meistens nicht ergonomisch günstig angeordnet; es ist auch bekannt, die Bedienelemente zu einer einzelnen Komponente in einer separaten Fernbedienung anzuordnen. Somit stehen dann gegebenenfalls mehrere Fernbedienungen nebeneinander, die nicht ohne Beobachtung voneinander unterschieden werden können und zudem zuviel Platz benötigen.
Für den Anwender ist der Zustand des Gesamtsystems nur über eine Sichtkontrolle ermittelbar, eine zusammengefasste, schnell interpretierbare Information über die Stellung und Wirkung der verschiedenen Komponenten ist nicht möglich.

Mit der Änderung der Gesamtvergrößerung verändert sich die Schärfentiefe des Mikroskops. Um auch nach Veränderung der Vergrößerung präzise und feinfühlig fokussieren zu können ist daher auch eine Änderung des Übersetzungsverhältnisses der Fokussierbewegung notwendig. Daher ist es bekannt, einen Grob- und einen Feintriebmodus vorzusehen, diese Abstufung kann aber die Bedürfnisse der Bediener nicht befriedigen.
Mit dem Wechsel der Vergrößerung und/oder der Apertur ändert sich weiterhin die Helligkeit des Bildes, weshalb die Helligkeit nach der Änderung entsprechend manuell angepasst werden muß.

In der DE 101 13 084 A1 wird ein Autofokussystem für ein Mikroskopsystem beschrieben. Dabei wird die rückgemeldete Bildschärfe-Information zum Nachregeln der Fokusposition benutzt und auch die Ansteuerung eines Objektivwechslers und/oder einer Zoommöglichkeit ist hierbei vorgesehen.

Aus der DE 101 06 696 A1 ist ein höhenverstellbarer Tubus mit einschwenkbaren Korrekturelementen bekannt, die Zuordnung der angesteuerten Korrekturelemente zur eingestellten Höhe erfolgt durch geeignete Sensoren innerhalb des Tubus.

In der DE 101 57 613 A1 von Leica wird eine erweiterte Blendensteuerung für Bildeinblendungen in einem Stereomikroskop beschrieben. Dort werden Blenden abhängig von der Applikation und den Benutzerwünschen gesteuert, hierbei sind entsprechende Sensoren zur Positionsrückmeldung sowie Steuereinrichtungen zur Koordinierung und auch zur Verknüpfung mit einem externen Videocontroller für die eingespiegelten Daten und einer externen Operationssteuerungseinrichtung vorgesehen. Benutzerspezifische Speicherungen von Blendeneinstellungen sind vorgesehen. Die Kommunikation mit dem externen Videocontroller beschränkt sich auf die Beeinflussung des Bildes durch die Einblendung des Zustandes der Blendensteuerung. Ebenso ist die Kommunikation mit der externen Operationssteuerung auf die Einblendung des Zustandes in den linken oder den rechten Hauptstrahlengang beschränkt. Die Kommunikation des Systems ist fest vorgegeben und kundenseitig nicht an eine automatisierte Umgebung anpassbar. Rückmeldungen über den Zustand werden nur von den Sensoren innerhalb der Blendensteuerungsbaugruppe durchgeführt. Somit kann der Zustand anderer Komponenten und damit der Gesamtzustand des Systems nicht ermittelt und auch nicht angezeigt werden.

In der DE 195 37 868 A1 wird eine Beleuchtungseinrichtung für ein Stereomikroskop beschrieben, deren beleuchtungsseitige Schnittweite an die aktuelle abbildungsseitige Schnittweite eines Zoom-Objektivs angepaßt wird. Hierbei ist ein fester Kopplungsmechanismus zwischen den verstellbaren Optikelementen zur Vergrößerungsvariation im Abbildungsstrahlengang und den Optikelementen für die einzustellende Beleuchtungsschnittweite vorgesehen. Eine Vernetzung mit weiteren Komponenten ist offensichtlich nicht vorgesehen, es handelt sich um eine Insellösung.

Der Erfindung liegt die Aufgabe zugrunde ein Stereomikroskop-System zu entwickeln, das den Anwender von Routineaufgaben entlastet, ihn bei der Lösung seiner applikativen Aufgabenstellungen auch in ergonomischer Hinsicht unterstützt und das so variabel ist, daß es jederzeit erweitert und auch leicht in eine automatisierte Umgebung eingebunden werden kann.

Die Aufgabe wird erfindungsgemäß durch die Merkmale der unabhängigen Ansprüche gelöst, vorteilhafte Weiterentwicklungen sind in den abhängigen Ansprüchen ausgeführt.

Das erfindungsgemäße System für die Stereomikroskopie ist dadurch ausgezeichnet, dass alle wesentlichen Komponenten (vorzugsweise auch Komponenten, die beim Stand der Technik nicht motorisiert und die bisher deshalb vom Benutzer manuell zu bedienen sind) elektronisch ansteuerbar oder detektierbar sind, dass auf alle relevanten Betriebszustände und Einstellungen zugegriffen werden kann und daß sich durch eine geeignete Auswertung und Weiterverarbeitung dieser Informationen im Zusammenspiel der Komponenten völlig neue Funktionalitäten für die Stereomikroskopie ergeben.
Dabei ist es insbesondere von Vorteil, wenn diese Komponenten über "Eigenintelligenz" verfügen, d.h. nicht nur auf Befehle einer zentralen Instanz reagieren können, sondern auch Statusmeldungen anderer Komponenten auswerten und in eigene angepasste Zustandsänderungen umsetzen können.

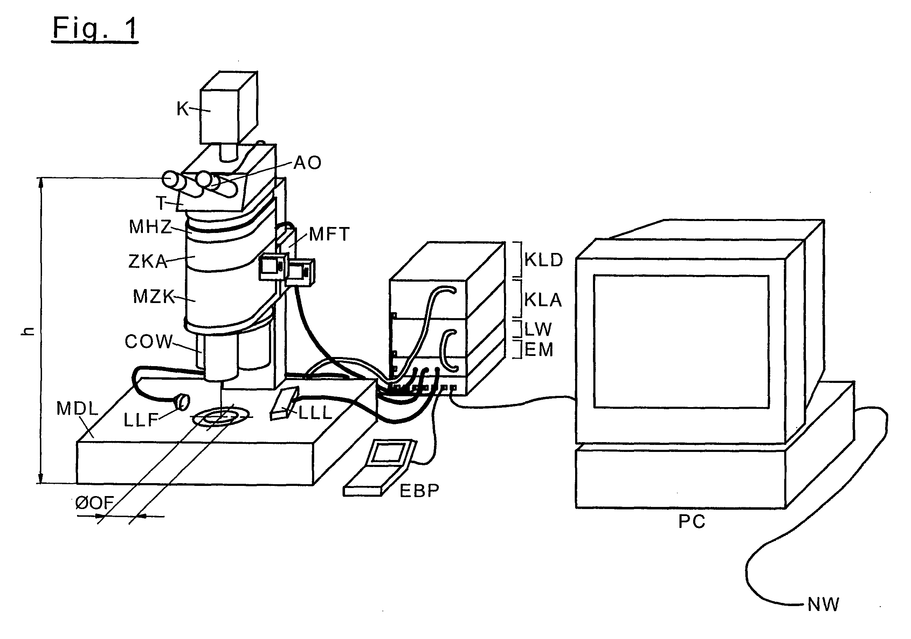

In Fig. 1 ist ein Anwendungsbeispiel für ein solches Stereomikroskop-Gesamtsystem dargestellt, der Aufbau wird hier nachfolgend beschrieben.
Jede motorisierte oder codierte Komponente ist über ein CAN-Bus-System oder ein anderes geeignetes Datenbus-System mit dem Gesamtsystem verbunden, in dem Ausführungsbeispiel sind folgende Komponenten am Datenaustausch beteiligt:
motorisierter Zoomkörper MZK, motorisierter Fokussiertrieb MFT, codierter Objektivwechsler mit 3 Objektiven COW (selbstverständlich kann der Objektivwechsler auch komplett motorisiert werden, die codierte Variante ist nur eine Ausführungsform), motorisierte Durchlichtbeleuchtung MDL, motorisierter höhenverstellbarer Zwischentubus MHZ, Anzeigeokular AO, Kaltlichtquelle für Durchlichtbeleuchtung KLD, Kaltlichtquelle für Auflichtbeleuchtung KLA, Lichtweiche LW, Elektronikmodul EM, ergonomisches Bedienpult EBP und ein PC. Hier nicht dargestellt, aber ebenfalls einbindbar, ist ein Digital-Zwischentubus mit einer Digitalkamera, der ebenfalls Daten mit dem Gesamtsystem austauschen kann. Mit geeigneten Schnittstellen können auch handelsübliche Kameras K mit dem Gesamtsystem über den PC kommunizieren, der PC eröffnet auch die Möglichkeit zur externen Kommunikation z.B. über das Internet.

Im Stereomikroskop selbst werden die Daten der angeschlossenen Komponenten im Elektronikmodul EM zusammengefasst, an das auch das Bedienpult EBP angeschlossen wird. Die zusammengefassten Daten über die Zustände der einzelnen Komponenten können dabei auf dem Bedienpult oder auch einem hier nicht dargestellten externen Display dem Benutzer übersichtlich dargestellt werden.
Das Elektronikmodul EM und die Lichtweiche LW werden unter den sowieso benötigten Kaltlichtquellen KLD und KLA angeordnet und benötigen daher keine zusätzliche Stellfläche. Die Kaltlichtquellen KLD und KLA sind beispielsweise handelsübliche SCHOTT-Kaltlichtquellen KL2500LCD mit hoher Leistung und können über die vorhandene Fernsteuerbuchse hinsichtlich der Farbtemperatur ferngesteuert werden. Die Steuerung der Helligkeit wird in der motorisierten Durchlichteinrichtung MDL und in der Lichtweiche LW elektronisch ansteuerbar durchgeführt.

Jede Komponente kann weiterhin die Bedienelemente für ihre Grundfunktionen aufweisen, mit der Benutzung des gemeinsamen Bedienpults EBP werden die Vorteile der erfindungsgemäßen Lösung realisierbar. Mit diesem Bedienpult EBP können alle Zustände der ansteuerbaren Komponenten des Gesamtsystems abgefragt und eingestellt werden, wobei die am häufigsten benötigten Bedienelemente für die Fokussierung und den Zoom auch ohne Beobachtung dieser Bedienelemente mit hoher Bediensicherheit benutzt werden können. Das Bedienpult EBP ist ergonomisch geformt, der Aufstellort für das Bedienpult EBP kann vom Benutzer frei gewählt werden und damit lässt sich durch die Fernbedienung eine wesentlich ergonomischere Bediensituation erreichen.
In das System können auch Elemente für eine Freihand-Bedienung wie z.B. über Fußschalter oder Sprachsteuerung eingebunden werden, sodass die Hände des Bedieners frei sind für die Manipulation am Objekt.

Die Anbindung eines PC ermöglicht mit der Einbindung in ein Netzwerk (z.B. das Internet oder ein lokales Netzwerk) auch die Fernsteuerbarkeit des Stereomikroskop-Systems über große räumliche Distanzen. Durch diese Vernetzung lassen sich auch mehrere Stereomikroskope von einer zentralen Instanz aus steuern, was insbesondere in automatisierten Taktstrassen o.ä. von Vorteil ist.
Außerdem kann das komplette System am PC über eine Makro-Programmierung (z.B. über Visual Basic™) direkt vom Benutzer automatisiert werden und kann deshalb ohne großen Aufwand in bestehende Prozeßketten z.B. zur Prozeßüberwachung auch an mehreren Stellen eingebunden werden. Die Programmierung des Systems kann aktions- und/oder zeitgesteuert erfolgen. Die Makros lassen sich auch ohne PC mit dem Bedienpult EBP erzeugen und wieder abrufen. Weiterhin lassen sich Bedienfolgen in die Steuereinheit laden und mit Hilfe des Bedienpultes EBP auswählen und starten.

Es lassen sich auch mehrere komplette Mikroskope ohne ein Netzwerk nur über den CAN-Bus miteinander verbinden und als Gesamtsystem mit einem Bedienpult EBP zentral ansteuern.

Das erfindungsgemäße System ist geeignet, die Arbeit mit Datenbanken zu unterstützen, indem der Gerätezustand bzw. die Einstellungen der zur Bilderzeugung wesentlichen Komponenten zusammen mit fotografischen oder digitalfotografischen Aufnahmen abgespeichert werden. Daher eignet es sich auch für Dokumentationszwecke, d.h. die Einstellungen während des Betriebs des Stereomikroskops können ohne manuellen Aufwand mit den Bildern zusammen erfaßt und abgespeichert werden und es lassen sich zusätzlich weitere Informationen erfassen und abspeichern.

Sämtliche Einstellungen können benutzerspezifisch abgespeichert und wieder reproduziert werden, wodurch sich nach einem Benutzerwechsel und/oder Aufgabenwechsel besonders bei empirisch ermittelten Einstellungen eine Zeitersparnis und eine erhöhte Einstellgenauigkeit der Reproduzierung ergibt. Die gute und schnelle Reproduzierbarkeit ist besonders für die zahlreichen Beleuchtungsvarianten von Vorteil und wird besonders durch die Lichtweiche LW mit mehreren dimmbaren Ausgängen für je einen Lichtleiter mit Anschluß für die KL1500LCD und die motorisierte Durchlichteinrichtung unterstützt. Es können mit dieser Anordnung beliebige Beleuchtungs-Kombinationen auch im Mischlicht erzeugt werden, somit können über geeignete Empfänger auch Filmsequenzen mit wechselnden Beleuchtungsverhältnissen aufgezeichnet werden.

In Fig. 1 werden über die Lichtweiche LW der Zwischentubus für koaxiale Auflichtbeleuchtung ZKA, ein Lichtleiter mit Fokussiervorsatz LLF und ein Lichtleiter mit Linienlicht LLL versorgt. Alternativ sind auch andere Varianten von Spaltringlichtern für Dunkelfeld- und Hellfeldbeleuchtung, Punkt-Ringlichter, diverse mehrarmige Lichtleiter mit oder ohne Fokussiervorsätzen und /oder Filtern etc. einsetzbar.

Zur Beleuchtung können auch strukturierte LED-Beleuchtungen eingesetzt werden, wie sie z.B. aus DE 37 34 691 bekannt sind.

Durch entsprechende Programmierung kann das System über eine Eigenintelligenz verfügen und somit dem Benutzer einen Teil der Routine-Arbeiten abnehmen und ihm redundante oder unvorteilhafte Einstellmöglichkeiten gar nicht erst vorschlagen bzw. anzeigen. Diese Eigenintelligenz kann vom Benutzer bei Bedarf auch deaktiviert werden.

Nachfolgend werden einige vorteilhafte Beispiele für die Realisierung der Erfindung aufgelistet:
Bei einem motorisierten höhenverstellbaren Zwischentubus MHZ zur Anpassung des Systems an eine ergonomisch günstige Einblickhöhe h kann eine einmal vorgegebene Einblickhöhe h über die Auswertung der aktuellen Zustandsdaten des Gesamtsystems im Rahmen des Stellbereiches des Zwischentubus MHZ konstant gehalten werden. Somit wird die Routinearbeit des Nachregelns der Einblickhöhe vom Benutzer auf das System übertragen.
Der Ausgleich der Fokusablagen für verschiedene Objektive (Parfokalitätsabgleich) läßt sich ebenfalls vom System übernehmen. Hierfür wird das Objektiv über die Stellung des codierten (oder motorisierten) Objektivwechslers COW erkannt, mit dem Objektiv ist auch die zugeordnete Fokusablage bekannt, diese läßt sich über den motorisierten Fokussiertrieb dem vorher benutzten Objektiv anpassen.

Die Empfindlichkeit für die Fokussierbewegung kann über die Auswertung der Daten für die aktuelle Gesamtvergrößerung automatisch voreingestellt werden und führt so zu einer stets optimal angepassten Übersetzung.
Die Helligkeit der Beleuchtung kann durch die Empfängersignale eines geeigneten Empfängers (z.B. einer externen Digitalkamera mit zugänglichen Daten für die Belichtungsmessung oder einer in einen Zwischentubus integrierten Digitalkamera) in einen für den Empfänger optimalen Betriebsbereich geregelt werden. Dabei kann z.B. die Farbtemperatur und die Helligkeit der Beleuchtung dem Empfänger angepaßt werden. Die Anpassung geschieht bezüglich der Farbtemperatur direkt an den Kaltlichtquellen KLD sowie KLA und bezüglich der Helligkeit in der motorisierten Durchlichtbeleuchtung MDL und der Lichtweiche LW.
Außerdem ist das System in der Lage die Helligkeit der benutzten Beleuchtung durch die Verwertung der Informationen zum Gesamtzustand des Systems bzw. zu den Änderungen dieses Gesamtzustandes (Zoomfaktor, Objektivfaktor, Apertur) über die o.g. farbneutrale Helligkeitseinstellung in den Elementen MDL und LW auf einen gewünschten einstellbaren Wert konstant zu halten. Somit wird die Routinearbeit des Nachregelns der Helligkeit vom Benutzer auf das System übertragen.
Das System ist in der Lage die Durchlicht-Hellfeld-Beleuchtung durch die Verwertung der Informationen zum Gesamtzustand des Systems (Zoomfaktor, Objektivfaktor) über Anpassoptiken, einen Lichtzoom und/oder eine Irisblende an das abgebildete Seh- bzw. Objektfeld ∅OF anzupassen. Dadurch wird kontrastverschlechterndes Streulicht vermieden und die Routinearbeit der Beleuchtungsanpassung an das Sehfeld wird vom Benutzer auf das System übertragen.
Die Durchlicht-Dunkelfeld-Beleuchtung kann durch die Verwertung der Informationen zum Gesamtzustand des Systems (Arbeitsabstand des Objektivs, freier Durchmesser des Objektivs) über eine Irisblende an das benutzte Objektiv angepaßt werden, sodass kein direktes Licht in das Objektiv eingekoppelt wird und trotzdem die maximal mögliche Beleuchtungsintensität zur DunkelfeldBeleuchtung benutzt werden kann. Im Idealfall kann für die Hellfeld- und die Dunkelfeldbeleuchtung dieselbe Irisblende benutzt werden wenn beide Beleuchtungsarten in einer gemeinsamen motorisierten Durchlichtbeleuchtung MDL vorgesehen werden.

Das einmal hinsichtlich der Beleuchtung vorkonfigurierte System kann durch die Auswertung der mit einem geeigneten Bildempfänger (z.B. einer Digitalkamera) ermittelten Bildinformationen über eine Bildverarbeitungssoftware selbstständig nach frei bestimmbaren Kriterien das beste Beleuchtungsverfahren mit den optimalen weiteren Systemparametern für eine bestimmte Aufgabe auswählen. Z.B. ist eine Einteilung in kontrastreiche, kontrastarme, spiegelnde und in absorbierende Objekte möglich. Ausgewertet werden können die minimalen und die maximalen im Bild vorkommenden Intensitäten mit ihrer Verteilung über das Bild. Bei erhöhtem Abstand von Minimum zu Maximum der Intensität (kontrastreiches Bild) ist eine diffuse Beleuchtung, die die dunklen Bereiche aufhellt, ideal, während im bei einem kontrastarmen Bild eher eine gerichtete Beleuchtung von Vorteil ist. Absorbierende Objekte lassen nur kleine Maximalwerte zu, spiegelnde Materialien erzeugen sehr hohe Maximalwerte, so dass die Intensität der Beleuchtung entsprechend eingestellt werden kann.. Auch die individuell gewonnenen Erkenntnisse über die Beleuchtung lassen sich vom Anwender über ein entsprechendes Makro-Programm in eine spezielle Auswahlroutine für die Beleuchtung überführen.

Außerdem liefert das System dem Anwender nützliche Informationen, die ihm bei bekannten Systemen nicht zur Verfügung stehen. So kann z.B. die unter Berücksichtigung der (dem System bekannten) optischen Daten errechnete Auflösung oder auch der Ansteuerungszustand einer segmentierten LED-Beleuchtung angezeigt werden. Diese Anzeige kann über die Einspiegelung in das Okular oder die Anzeige des Bedienpults EBP erfolgen. Eine weitere automatisch angezeigte nützliche Information ist die für die Messung in Z-Richtung wichtige Meßunsicherheit, die durch die Abfrage der Betriebszustände und die daraus berechnete Schärfentiefe automatisch ermittelt werden kann.
Das erfindungsgemäße System ermöglicht das Messen in der XY-Objektebene auch ohne kundenseitige Kalibrierung. Auf diese kann verzichtet werden, da die relevanten Komponenten werksseitig kalibriert werden können, diese Kalibrierdaten im System gespeichert bleiben können und durch die Abfrage der Betriebszustände alle relevanten Daten verfügbar sind.
Über einen motorisierten Objekttisch mit zusätzlicher Drehachse läßt sich der Komfort für den Anwender noch erhöhen. Dieser lässt sich ebenfalls in das System einbinden

Die Bilder aus verschiedenen Beleuchtungssituationen können überlagert und/oder einer weiteren Bildbearbeitung unterzogen werden um damit z.B. Eigenschaften des Objektes deutlicher hervorheben bzw. überhaupt erst sichtbar machen zu können. Dies kann auch an eine Erfolgskontrolle geknüpft sein, d.h. bei noch nicht zufriedenstellendem Ergebnis werden Parameter verändert und eine erneute Erfolgskontrolle wird durchgeführt. Hierfür muß lediglich das Gesamtsystem entsprechend programmiert werden.

Über das Stereomikroskop wird das linke und das rechte Bild (z.B. mit je einer Digitalkamera) aufgenommen, daraus wird rechnerisch ein echtes 3D-Modell generiert, welches über das automatisierte Gesamtsystem weiter ausgewertet werden kann und mit geeigneten Verfahren auch räumlich darstellbar ist (z.B. mit einer Shutterbrille oder Verfahren zum autostereoskopischen Sehen). Die zur Generierung des Stereomodells notwendigen Daten über Stereobasis, Vergrößerung usw. lassen sich ebenfalls vom System abfragen.

Das System kann zur Qualitätssicherung eingesetzt werden und die Meßergebnisse oder sonstigen Informationen aus dem Bild des Stereomikroskops, die z.B. über eine Bildverarbeitung auswertbar sind, können automatisch als Regelgröße für den vorgelagerten Fertigungsprozeß dienen. Das heißt, daß das Stereomikroskop-System mit dem vorgelagerten Fertigungsprozeß verknüpft werden kann, um die Fertigungsqualität zu verbessern. Der Vergleich der gemessenen bzw. abgebildeten Objekte mit virtuellen Softwaremodellen ermöglicht hierbei schnelle Entscheidungen. Dabei sind nicht nur auf 2D-Messungen sondern auch auf 3D-Messungen beruhende Ist-Größen mit z. B. aus dem CAD-Design stammenden Sollgrößen vergleichbar und bei Abweichungen eine Rückmeldung an den Produktionsprozess realisierbar.

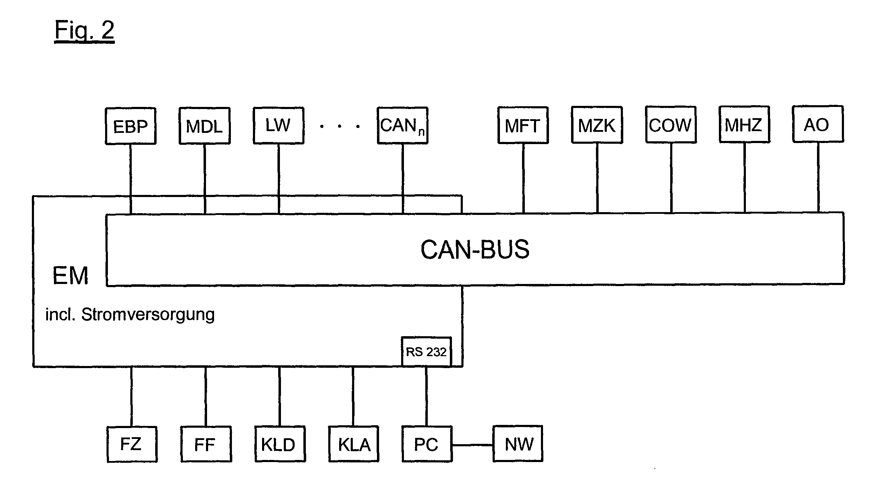

In Fig. 2 ist ein Ausführungsbeispiel für die Verdrahtung des Gesamtsystems dargestellt, dabei werden die Bezeichnungen aus Fig. 1 benutzt. Zusätzlich sind noch folgende Komponenten dargestellt: ein fußgesteuertes Bedienelement (z.B. Fußschalter) FZ zur Ansteuerung des motorisierten Zoomkörpers MZK und ein fußgesteuertes Bedienelement (z.B. Fußschalter) FF zur Ansteuerung des motorisierten Fokussiertriebes MFT. Diese zusätzlichen Komponenten werden zusammen mit den Kaltlichtquellen KLD und KLA sowie dem beispielsweise über eine RS232-Schnittstelle anschließbaren PC direkt am Elektronikmodul EM angeschlossen und sind dort mit dem CAN-Bus fest verknüpft. Trotzdem bedeutet diese feste Verknüpfung mit dem CAN-Bus im Elektronikmodul EM keine Funktions-Einschränkung des erfindungsgemäßen Gesamtsystems, da über die zusätzlichen CAN-Bus-Schnittstellen CANₙ beliebig viele CAN-Bus-fähige Komponenten angeschlossen werden können. Bei Bedarf könnten deshalb die fest verknüpften Komponenten auch durch komfortablere CAN-Bus-fähige Komponenten ersetzt werden. Selbstverständlich ist ein erfindungsgemäßer Betrieb des Gesamtsystems auch ohne die o.g. fest verknüpften Komponenten möglich. Die fest verknüpften Komponenten werden mit Steckerschnittstellen an das Elektronikmodul angeschlossen, wobei es vorteilhaft ist, wenn diese sich deutlich von den CAN-Bus-Steckerschnittstellen unterscheiden.
Über einen anschließbaren PC mit einem entsprechenden Netzwerkzugang NW wird der Betrieb des Gesamtsystems auch über ein Netzwerk (z.B. das Internet) möglich.
Die Stromversorgung der einzelnen Komponenten kann über den CAN-Bus oder auch separate Spannungsversorgung erfolgen.

Die Erfindung ist nicht an die dargestellten Ausführungsbeispiele gebunden, fachmännische Weiterentwicklungen der zur Grunde liegenden erfinderischen Idee führen nicht zu einem Verlassen des Schutzbereichs der Patentansprüche.

## Patentansprüche

1. Stereomikroskop, welches eine Anzahl von schaltbaren oder einstellbaren Komponenten wie Beleuchtungseinrichtung, Fokustrieb, Zoomobjektiv aufweist, wobei die Komponenten über eine elektrische Ansteuerung bzw. eine elektrische Status-Erkennung des Schaltzustandes bzw. der Einstellung der Komponente verfügen und wobei eine Verbindung zwischen den Komponenten zum Austausch von Steuerbefehlen oder Statusinformationen vorgesehen ist.

2. Stereomikroskop nach Anspruch 1, wobei die Verbindung zwischen den Komponenten durch ein elektrisches Netzwerk realisiert wird.

3. Stereomikroskop nach Anspruch 1 oder 2, wobei die Komponenten über eine lokale Einrichtung zur Verarbeitung der von der Komponenten oder anderer Komponenten generierten Steuerbefehle und Statusinformationen nach einem vorgegebenen Programm verfügen.

4. Stereomikroskop nach einem der Ansprüche 1 bis 3, wobei eine zentrale Einrichtung zur Verarbeitung der Steuerbefehle und Statusinformationen der Komponenten nach einem vorgegebenen Programm vorgesehen ist.

5. Stereomikroskop nach Anspruch 4, wobei die zentrale Einrichtung einen Datenspeicher aufweist, welcher die Einstellungen der Komponenten abspeichem kann.

6. Stereomikroskop nach Anspruch 5, wobei die zentrale Einrichtung aus den im Datenspeicher abgespeicherten Einstellungen der Komponenten Steuerbefehle für die Einstellung der Komponenten gemäß den abgespeicherten Werten generieren kann.

7. Stereomikroskop nach Anspruch 4, wobei eine Anzeige vorgesehen ist, welche mit der zentralen Einrichtung verbunden ist und auf der Statusinformationen der mit der zentralen Einrichtung verbundenen Komponenten darstellbar sind.

8. Stereomikroskop nach Anspruch 7, wobei auf der Anzeige aus den Statusinformationen der Komponenten abgeleitete Informationen darstellbar sind.

9. Stereomikroskop nach Anspruch 7 oder 8, wobei die Anzeige eine Einrichtung zur Einspiegelung in ein Okular des Stereomikroskops enthält.

10. Stereomikroskop nach Anspruch 1, wobei die Komponenten einen elektrisch auslesbaren Speicher für Kalibrierdaten aufweisen.

11. Stereomikroskop nach Anspruch 10 und einem der Ansprüche 4 bis 9, wobei die zentrale Einrichtung auf die Kalibrierdaten der Komponenten zugreifen und diese bei der Generierung der Statusinformationen berücksichtigen kann.

12. Stereomikroskop nach Anspruch 11, wobei die optische Auflösung und/oder die Schärfentiefe oder von diesen abgeleitete Größen darstellbar sind.

13. Stereomikroskop nach Anspruch 11, wobei ein Ausgleich der Fokusablagen für verschiedene Objektive (Parfokalitätsabgleich) realisierbar ist.

14. Stereomikroskop nach einem der Ansprüche 4 bis 13, wobei durch die zentrale Einrichtung die Empfindlichkeit für die Fokussierbewegung über die Auswertung einer durch die Statusinformationen der Komponenten bestimmten aktuellen Gesamtvergrößerung einstellbar ist.

15. Stereomikroskop nach einem der Ansprüche 4 bis 14, wobei eine Komponente eine Einrichtung der Bestimmung der Helligkeit der Beleuchtung aufweist und durch die zentrale Einrichtung eine Helligkeitsregelung unter Berücksichtigung der Statusinformationen dieser Komponente realisierbar ist.

16. Stereomikroskop nach Anspruch 15, wobei die Statusinformationen der Komponente zur Helligkeitsbestimmung zur Auswahl eines geeigneten Beleuchtungsverfahrens dienen und wobei durch die zentrale Einrichtung dieses Beleuchtungsverfahren einstellbar ist.

17. Stereomikroskop nach einem der Ansprüche 4 bis 16, wobei durch die zentrale Einrichtung eine Durchlicht-Hellfeld-Beleuchtung an das Seh- bzw. Objektfeld angepaßt werden kann.

18. Stereomikroskop nach einem der Ansprüche 4 bis 17, wobei die zentrale Einrichtung über Fußschalter oder Sprachkontrolle steuerbar ist.

19. Stereomikroskop nach einem der Ansprüche 4 bis 18, wobei die zentrale Einrichtung mittels einer Makro-Programmierung die Komponenten automatisiert ansteuern kann.

20. Stereomikroskop nach einem der Ansprüche 4 bis 19, wobei für mehrere Stereomikroskope eine gemeinsame zentrale Einrichtung vorgesehen ist.

21. Stereomikroskop nach einem der Ansprüche 4 bis 20, wobei das Stereomikroskop durch einen Personal Computer bedienbar ist.
